# EUROPEAN PATENT APPLICATION

(11) **EP 4 675 695 A1**
(43) Date of publication of application: **07.01.2026**
(21) Application number: 24863315.8
(22) Date of filing: 29.08.2024
(51) Int. Cl.: H01M 4/13, H01M 10/04, H01M 4/139

(54) **SINGLE-SIDED ELECTRODE FOR SECONDARY BATTERY, METHOD FOR MANUFACTURING SAME, AND ELECTRODE ASSEMBLY AND SECONDARY BATTERY COMPRISING SAME**

(30) Priority: 08.09.2023 KR 20230119928
(71) Applicant: LG Energy Solution Ltd., Seoul 07335 (KR)
(72) Inventor: WON, Kwangho, Daejeon 34122 (KR); LEE, Jinwuk, Daejeon 34122 (KR)
(74) Representative: Plasseraud IP
(86) International application number: PCT/KR2024/096086
(87) International publication number: WO 2025/053736

(57) **Abstract**

According to an embodiment of the present disclosure, there is provided a one-sided electrode for a secondary battery, in which: the one-sided electrode comprises a current collector, and an active material layer formed on one surface of the current collector, the active material layer comprises a flat portion where the thickness of the active material layer is constant and an inclined portion where the thickness of the active material layer decreases compared to the flat portion, and a tape is attached to a portion corresponding to the inclined portion on the other surface of the current collector of the one-sided electrode, a method for manufacturing the same, and an electrode assembly and a secondary battery comprising the same.

## Description

### [TECHNICAL FIELD]

### Cross-Reference to Related Application(s)

This application claims priority to and the benefit of Korean Patent Application No. 10-2023-0119928, filed on September 8, 2023, with the Korean Intellectual Property Office, the disclosure of which is incorporated herein by reference in its entirety.

The present disclosure relates to a one-sided electrode for secondary battery, a method for manufacturing the same, and an electrode assembly and a secondary battery comprising the same.

### [BACKGROUND]

As technologies for mobile devices are developed, and demand for the mobile devices increases, there has been a rapid increase in demand for secondary batteries as energy sources. In particularly, secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer, and a wearable device.

Based on the shape of a battery case, a secondary battery may be classified into a cylindrical battery where an electrode assembly is built into a cylindrical metal container, a prismatic battery where an electrode assembly is built into a prismatic metal container, or a pouch type battery where an electrode assembly is built into a pouch-shaped case made of an aluminum laminate sheet.

Meanwhile, the electrode assembly mounted in the battery case is a power generating element capable of charging/discharging and including a stacked structure of a cathode, an anode and a separator. The electrode assembly may be classified into a jelly roll type, a stacked type and a stacked/folded type. The jelly-roll type electrode assembly is configured to have a structure in which a long sheet type cathode and a long sheet type anode, to which active materials are applied, are wound with a separator interposed between the cathode and the anode, the stacked type electrode assembly is configured to have a structure in which a large number of cathodes having a predetermined size and a large number of anodes having a predetermined size are sequentially stacked in a state in which separators are interposed between the cathodes and the anodes, and the stacked/folded type electrode assembly is a combination of the a jelly-roll type electrode assembly and the stacked type electrode assembly, which is a form that the unit cells are arranged on a separator and wound.

Among these assemblies, the electrode assembly including the stack, except for the jelly-roll type, includes a stacked form of unit electrodes including tabs.

The cathode and anode used at this time are respectively manufactured by a method in which materials such as an active material, a conductive material, and a binder are mixed with a solvent to prepare a slurry, which is then applied to a current collector sheet, dried, rolled, and then slit into unit electrodes. In this case, since the slurry is a viscous liquid substance, a sliding phenomenon occurs in which the slurry flows on the current collector sheet at the boundary between a coated region and a non-coated region, and the thickness becomes thin at the flowing region.

Since this sliding phenomenon occurs between the non-coated region, i.e., a plain portion, formed to secure the tab region, and the coated portion of the coated region, it is generally located at a upper end of the electrode assembly.

However, due to the sliding phenomenon, the upper end part of the thin electrode assembly is weakened in adhesive strength between the electrode and the separator or is not adhered at all, so the distance between the cathode-separator-anode increases, which increases resistance and promotes side reactions to cause local swelling. Ultimately, this problem leads to a decrease in battery performance.

Thus, in recent years, various methods have been developed to solve the above problems, such as a roller tilt method, which twists the rolling roller to roll the entire cell, a sub-roller method, which presses the upper end once again through an additional roller, and a JF taping method, which applies tape to the liner during the jig formation stage so that the upper end of the cell receives the same pressure as the center of the cell.

However, the roller tilt method can improve the adhesion of the upper end, but has a problem that the possibility that the adhesion of the lower end is weakened or not adhered increases, the sub-roller method has difficulty in fine adjustment, has no guide to optimal conditions, and causes a problem of side effects due to excessive pressing, and the JF taping method has a problem that a pressure difference may occur when a tolerance occurs in the cell position within the jig formation device, which may lead to performance deviation between cells.

Therefore, there is a need to develop a secondary battery technology that solves the problems associated with the sliding of the upper end part of the electrode assembly and also does not cause additional problems.

### [DETAILED DESCRIPTION OF THE INVENTION]

### [Technical Problem]

It is an object of the present disclosure to provide an electrode, an electrode assembly, and a secondary battery, which compensates the thickness of an inclined portion where the active material layer becomes thinner due to the sliding that occurs during the electrode manufacturing process, and reduces the gap between components, which prevents the increase in resistance and side reactions, and improves swelling and enhances life characteristics.

It is another object of the present disclosure to provide a preparation method that enables the thickness compensation to be covered throughout the entire sliding region to achieve the effect.

The technical objects to be solved by the embodiments of the present disclosure are not limited to those disclosed above, and other objects which are not mentioned herein should be clearly understood by those skilled in the art from the following detailed description and the accompanying drawing.

### [Technical Solution]

According to an embodiment of the present disclosure, there is provided a one-sided electrode for a secondary battery, in which:
the one-sided electrode comprises a current collector, and an active material layer formed on one surface of the current collector,
the active material layer comprises a flat portion where the thickness of the active material layer is constant and an inclined portion where the thickness of the active material layer decreases compared to the flat portion, and
a tape is attached to a portion corresponding to the inclined portion on the other surface of the current collector of the one-sided electrode.

Wherein, the current collector is formed with a tab, and the tab may be located in a direction in which the inclined portion is formed.

In this case, the tape formed on the other surface of the one-sided electrode may be formed to have a length equal to the width of the one-sided electrode, which is perpendicular to the direction in which the tab of the one-sided electrode protrudes.

The tape may be a casted polypropylene(CPP).

Further, the formation thickness of the tape may be 30% to 100% of the thickness of the flat portion.

Moreover, according to another embodiment of the present disclosure, there is provided a method for manufacturing a one-sided electrode of claim 1, in which: an electrode slurry containing an active material is applied to one surface of a current collector sheet, dried, and rolled to form an active material layer having a flat portion having a constant thickness and an inclined portion whose thickness decreases compared to the flat portion, and before a slitting process in which the sheet is cut into unit electrodes, tape is attached to the other surface of the current collector sheet corresponding to the inclined portion.

The inclined portion formed by application of the electrode slurry may be formed on the non-coated portion side of the current collector sheet where the electrode slurry is not applied and the tab is subsequently formed.

Meanwhile, the tab is formed by a notching process, and the notching process may be performed simultaneously with the slitting process or after the slitting process.

Furthermore, according to yet another embodiment of the present disclosure, there is provided an electrode assembly for a secondary battery, comprising: a cathode, an anode, and a separator interposed between the cathode and the anode, wherein the one-sided electrode is located at one or both outermost sides of the electrode assembly.

Wherein, the one-sided electrode may be a one-sided cathode.

In this case, the active material layer of the one-sided cathode may be formed in a direction facing the anode located on the inside of the electrode assembly.

The electrode assembly may be a form including stacking of unit electrodes, for example, a stack-and-fold type electrode assembly having a structure in which unit cells including an electrode and a separator are wound in one direction by a separation film, a lamination-and-stack type electrode assembly having a structure in which the unit cells and the separator are stacked and laminated, or a zigzag stack type electrode assembly in which the unit cells or unit electrodes are folded in a zigzag form by the separation film.

Furthermore, according to yet another embodiment of the present disclosure, there is provided a secondary battery comprising the electrode assembly.

### [BRIEF DESCRIPTION OF THE DRAWING]

FIG. 1 is a cross-sectional view of a one-sided electrode according to an embodiment of the present disclosure.
FIG. 2 is a plan view of the other surface of the current collector of the one-sided electrode according to an embodiment of the present disclosure.
FIG. 3 is a schematic diagram showing some steps of a method for manufacturing a one-sided electrode according to yet another embodiment of the present disclosure.
FIG. 4 is a cross-sectional view of an electrode assembly according to yet another embodiment of the present disclosure.
FIG. 5 is a schematic diagram showing various types of electrode assemblies according to yet another embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Throughout the descriptions herein, the terms "about or approximately" or "substantially" are intended to have meanings close to numerical values or ranges specified with an allowable error and intended to prevent accurate or absolute numerical values disclosed for understanding of the present invention from being illegally or unfairly used by any unconscionable third party.

Throughout the descriptions herein, the term "band" means an object which is narrow in width and long in length.

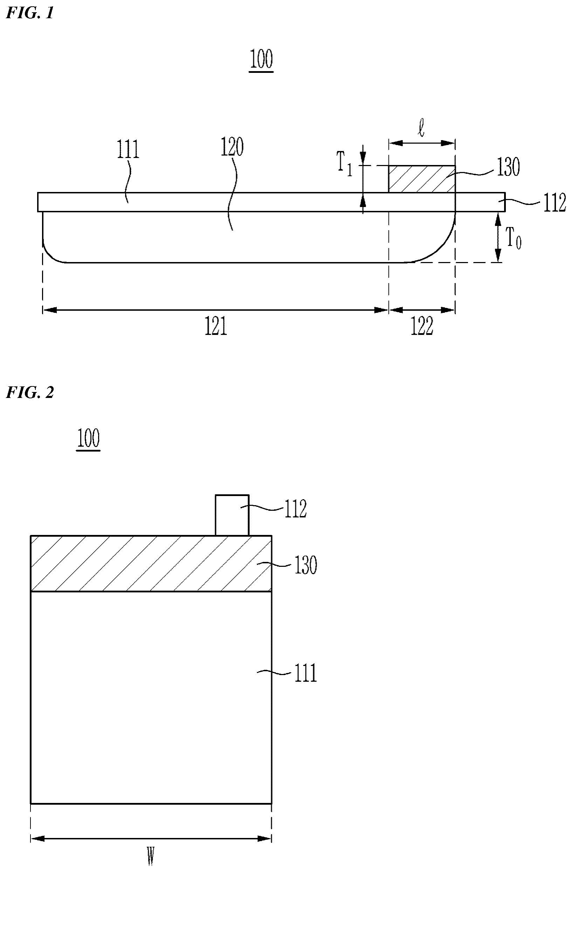

FIG. 1 illustrates a cross-sectional view of a one-sided electrode according to an embodiment of the present disclosure, and FIG. 2 illustrates a plan view of the other surface of the current collector of the one-sided electrode according to an embodiment of the present disclosure.

Referring to FIGS. 1 and 2, the one-sided electrode 100 according to an embodiment of the present disclosure comprises a current collector 111, and an active material layer 120 formed on one surface of the current collector 111, and the active material layer 120 comprises a flat portion 121 where the thickness of the active material layer 120 is constant and an inclined portion 122 where the thickness of the active material layer 120 decreases compared to the flat portion 121. In addition, the current collector 111 is formed with a tab 112, and the tab 112 is located in a direction in which the inclined portion 122 is formed.

Not only the one-sided electrode 100, but also the double-sided electrodes that are subsequently stacked together with the one-sided electrode 100 are of course formed by coating the active material slurry, whereby as described above, the electrode assembly has a flat portion and an inclined portion in the direction of the non-coated portion where the tab is formed, and is manufactured in a direction stacked and wound such that the inclined portions are located on the same line. Therefore, in the portion where the inclined portions are located, the components of the electrode assembly cannot help but generate gaps between each other.

However, the generation of such gaps reduces the adhesion between the electrode and the separator, and forms a space between the electrodes, and accordingly, not only the subsequent formation of lithium dendrites and side reactions with the electrolyte occur actively, but also local swelling occurs due to gas generation caused by the acceleration of the side reaction, which can significantly threaten the safety of the secondary battery.

Therefore, research is actively being conducted on a method that can solve this problem, and the present disclosure solves this problem by attaching a tape to the one-sided electrode existing at the outermost side.

Referring again to FIGS. 1 and 2, the one-sided electrode 100 according to an embodiment of the present disclosure has a structure in which a tape 130 is attached to a portion corresponding to an inclined portion 122 on the other surface of the current collector 111 on which the active material layer 120 is not formed.

By attaching such a tape 130, the thickness difference occurring at the inclined portion 122 can be reduced, and thus the deviation in pressure can be reduced, thereby securing the safety of the secondary battery and improving its performance.

At this time, in order to effectively cover the inclined portion 122, the tape 130 can be formed to have a length 1 corresponding to the inclined portion 122, and can be formed to have a length equal to the width w of the one-sided electrode 100 which is perpendicular to the direction in which the tab 112 of the one-sided electrode 100 protrudes.

Further, the thickness T₁ of the tape 130 must have a thickness to a degree of offsetting the thickness difference between the flat portion 121 and the inclined portion 122. At this time, it may vary depending on the number of electrodes stacked, and is not limited thereto, but specifically, it may be 30% to 100%, specifically, 50% to 100%, and more specifically, 70% to 90% of the thickness T₀ of the flat portion.

If the thickness of the tape 130 is too thin outside the above range, it cannot sufficiently cover the thickness difference due to the electrodes being stacked in the electrode assembly, which is not preferable, and if the thickness is too thick, it may lead to an increase in the volume of the electrode assembly, which is not preferable.

The type of such tape is not limited to a material that does not cause a side reaction in the operation of the secondary battery, and an insulating tape used in a conventionally known battery may be used, and specifically, casted polypropylene(CPP) may be used.

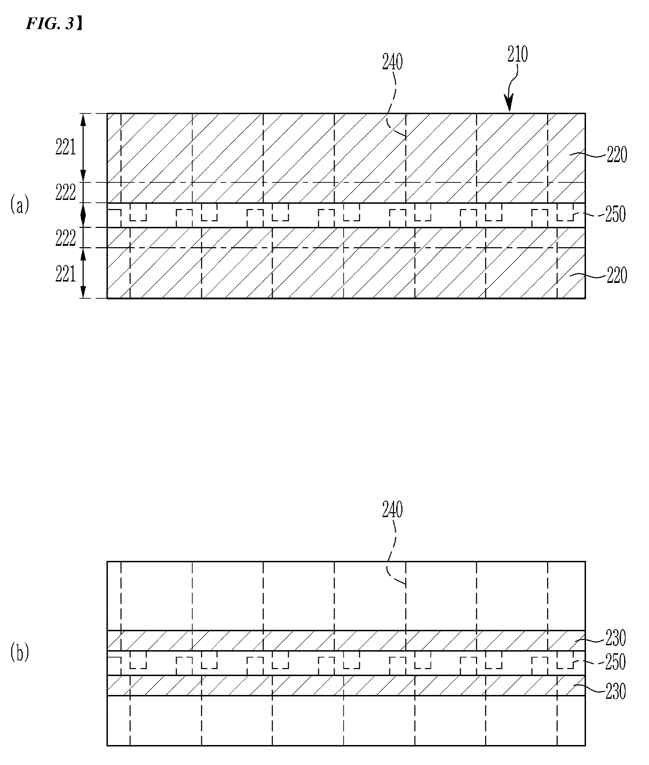

Meanwhile, FIG. 3 shows a schematic diagram of several steps for manufacturing such a one-sided electrode 100. Specifically, FIG. 3 shows the process of attaching the tape, where (a) shows the surface on which the active material layer is formed, and (b) shows the surface to which the tape is attached.

Referring to FIG. 1 and FIG. 2 together with FIG. 3, in order to manufacture a one-sided electrode 100, first, an electrode slurry containing an active material is applied to one surface of a current collector sheet 210, dried, and rolled to form an active material layer 220 including a flat portion 221 whose thickness is constant and an inclined portion 222 whose thickness decreases compared to the flat portion 221.

Subsequently, a slitting 240 process is performed to cut the current collector sheet 210 into unit electrodes. Before this slitting 240 process, a tape 230 is attached to the other surface of the current collector sheet 210, that is, a surface on which the active material layer 220 is not formed with reference to (b), so that the tape 230 covers the portion corresponding to the inclined portion 222.

At this time, the inclined portion 222 occurs at the interface between the non-coated portion where the electrode slurry is not applied and the coated portion where the electrode slurry is applied, and thus is formed on the non-coated portion side where the tab 112 is formed in the active material layer 220, and the tape 230 is attached adjacent to the tab 112.

Then, after the attachment of the tape 230 is completed, a process in which the current collector sheet 210 on which the active material layer 220 is formed on one surface is slitted 240 into a unit electrode is performed, and the notching process for forming the tab 112 is also performed simultaneously with the slitting 240 process or after the slitting 240 process, thereby manufacturing a one-sided electrode 100.

In this way, according to the present disclosure, since the tape 230 is attached before the slitting 240 process into the unit electrode, the width w of the one-sided electrode 100 and the length of the tape 230 match as described above. Thus, compared with the case where the tape is attached after the manufacture of the one-sided electrode or after the manufacture of the electrode assembly, there is no process dispersion in the attachment position or size of the tape 130, so that an electrode assembly of similar quality can be produced.

In addition, a non-covered portion, which can cover the entire region of the inclined portion 122 of the one-sided electrode 100 and may occur at the end of the width of the one-sided electrode 100, is not formed, which is more preferable.

Meanwhile, according to yet another embodiment of the present disclosure, there is provided an electrode assembly for a secondary battery, comprising: a cathode, an anode, and a separator interposed between the cathode and the anode.

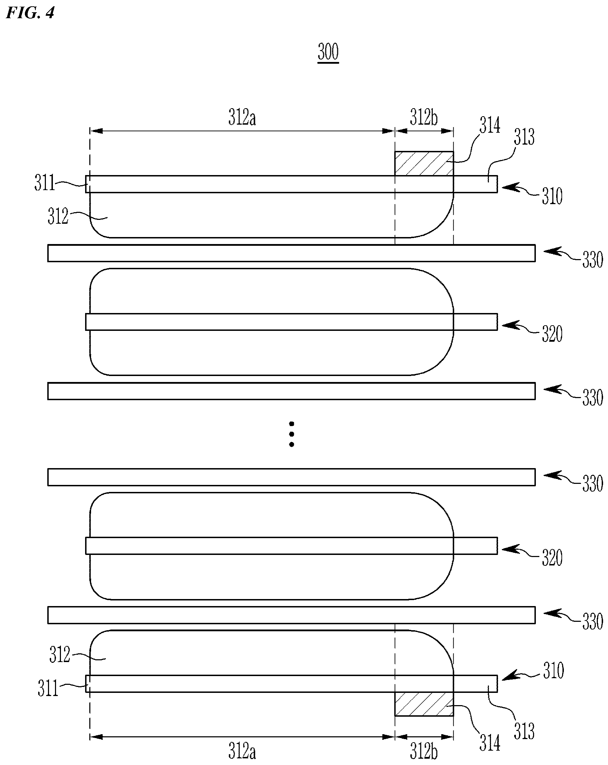

FIG. 4 illustrates such an electrode assembly, and specifically, FIG. 4 illustrates a cross-sectional view of an electrode assembly 300 according to yet another embodiment of the present disclosure.

Referring to FIG. 4, the electrode assembly 300 according to yet another embodiment of the present disclosure has a structure in which one-sided electrodes are formed on both sides of the outermost part, and double-sided electrodes are formed between them. At this time, the one-sided electrode located at the outermost side may be a one-sided cathode 310, and the double-sided electrodes on the inside may be stacked so that the facing electrodes have different polarities from each other.

For convenience of explanation, FIG. 4 illustrates only the anodes 320 facing the one-sided cathodes 310, and illustration and description of other electrodes located between them are omitted.

In addition, even if the electrode located at the outermost side is a double-sided anode including active material layers on both surfaces of the current collector, there is no anode to receive the Li ions released from the outermost active material layer facing the battery case, which may cause battery case corrosions and lithium plating problems. Therefore, it is preferable that the one-sided cathode 310 is located at the outermost side. Therefore, at this time, the active material layer 312 of the one-sided cathode 310 may be stacked so as to be formed in a direction facing the anode 320 located on the inside of the electrode assembly 300.

Furthermore, as described above, the active material layer 312 of the one-sided cathode 310 has a flat portion 312a where the thickness of the active material layer 312 is constant and an inclined portion 312b where the thickness decreases from the flat portion 312a, so that a gap occurs in which the interval between the components of the electrode assembly 300 widens in the direction of forming the tab 313 in which the inclined portion 312b is formed.

The occurrence of such a gap can cause many problems in the secondary battery. Therefore, according to an embodiment of the present disclosure, each of the one-sided cathodes 310 located at the outermost side has tapes 314 attached to a portion corresponding to the inclined portion 312b on the other surface of the current collector 311 where the active material layer 312 is not formed.

Additional configurations for specific attachment positions and sizes of the tapes are as described in FIGS. 1 and 2.

As such, the electrode assembly 300 according to the present disclosure has tapes 314 attached to the other surface of the current collector 311 of the outermost one-sided cathodes 310 so as to correspond to the inclined portions 312b, so that the tapes 314 plays a role in offsetting the thickness difference between the flat portions 312a and the inclined portions 312b. Thus, uniform pressure can be applied to the flat portions 312a and the inclined portions 312b, thereby solving problems such as reduction of adhesive strength between the electrode and the separator, increase of side reactions, and swelling, which were problematic in a conventional case.

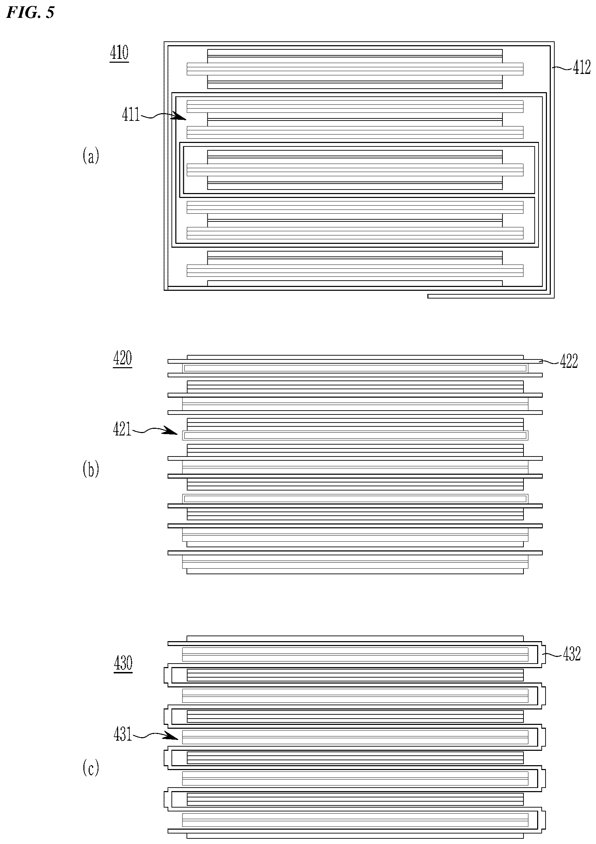

Meanwhile, the electrode assembly to which such a configuration can be applied is not limited as long as it has a structure including a unit electrode. To explain these examples, a schematic diagram showing the types of various electrode assemblies 410, 420 and 430 to which the one-sided electrode of the present disclosure can be applied is illustrated in FIG. 5. At this time, the electrode assembly of FIG. 5 is shown as a cross-sectional view in a direction perpendicular to the direction in which the tab is formed, rather than the direction in which it is formed, and therefore, the portion where the tape is formed is not illustrated.

Referring to FIG. 5, (a) shows a stack-and-folding type electrode assembly 410, (b) shows a lamination-and-stack type electrode assembly 420, and (c) shows a zigzag stack type electrode assembly 430.

Specifically, the stack-and-folding type electrode assembly 410 has a structure in which unit cells 411 including electrodes and separators are wound in one direction by a separation film 412.

Here, the unit cells 411 may be a mono-cell including an electrode and a separator, a full-cell having a structure in which electrodes having different polarities are located at the outermost sides, for example, a cathode/separator/anode structure, or a bi-cell having a structure in which electrodes having the same polarity are located at the outermost sides, for example, a cathode/separator/anode/separator/cathode structure, or an anode/separator/cathode/separator/anode structure, or a combination thereof.

Similarly, the lamination-and-stack type electrode assembly 420 may have a structure in which the unit cells 421 are stacked and laminated with a separator 422.

Here, the stacking of the unit cells 421 and the separator 422 is a concept that includes a structure including the separator 422 on the outer corner of the unit cells 421, and the unit cells 421 are the same as described for the unit cells 411.

Lastly, the zigzag stack type electrode assembly 430 may have a structure in which the unit cells or unit electrodes 431 are folded in a zigzag form by the separator film 432.

At this time, the unit cells 431 are as described above.

Meanwhile, the composition, structure, etc. of the cathode, anode, and separator constituting other electrode assemblies are known in the art, and therefore, a detailed description thereof is omitted herein.

Furthermore, according to yet another embodiment of the present disclosure, a secondary battery including the electrode assembly and an electrolyte is provided.

Such a secondary battery is also known in the art, and therefore, a detailed description thereof excluding the above-mentioned configuration is omitted herein.

While preferred embodiments of the present disclosure have been described in detail with reference to the accompanying drawings, the technical scope of the present disclosure is not limited to the embodiments, and also includes various modifications and improvements made by one of ordinary skill in the art using the concepts defined in the claims attached therewith.

### [Description of Reference Numerals ]

100: one-sided electrode
120, 220, 312: active material layer,
130, 230, 314: tape,
210: current collector sheet,
240: slitting,
250: notching,
300 410, 420, 430: electrode assembly,
310: one-sided cathode,
320: anode,
330: separator,
411, 421, 431: unit electrode or unit cell
412, 422, 432: separator or separation film
1200, 2200: separation film,
1300: double-sided tapes,
1310: first double-sided tape,
1320: second double-sided tape

### [Industrial Applicability]

According to the embodiments, a one-sided electrode of the present disclosure and an electrode assembly including the same compensate the thickness of an inclination portion where the active material layer becomes thinner due to the sliding that occurs during the manufacturing process of the electrode, and reduces the gap between components, which prevents an increase in resistance or side reactions, and improves swelling and enhances life characteristics.

In addition, since the thickness is compensated by attaching a tape to the other surface of the outermost one-sided electrode of the electrode assembly, that is, the other surface where the active material layer is not formed, the reaction area of the active material layer is not reduced, so there is no capacity reduction, which is advantageous in securing high capacity.

Moreover, according to the manufacturing method of the one-sided electrode of the present disclosure, the above effect can be achieved with a very simple taping method, and before the slitting process into the unit electrode, the tape is attached as a whole, and then the slitting process is performed. Therefore, the tape can cover the width direction of the one-sided electrode as a whole by matching the shape of the one-sided electrode to which it is applied, and thus, compared to the case of attaching the tape after lamination, process dispersion of the attachment position, size, etc. of the tape does not occur, which is more effective.

## Claims

1. A one-sided electrode for a secondary battery, in which:
the one-sided electrode comprises a current collector, and an active material layer formed on one surface of the current collector,
the active material layer comprises a flat portion where the thickness of the active material layer is constant and an inclined portion where the thickness of the active material layer decreases compared to the flat portion, and
a tape is attached to a portion corresponding to the inclined portion on the other surface of the current collector of the one-sided electrode.

2. The one-sided electrode according to claim 1,
wherein the current collector is formed with a tab, and the tab is located in a direction in which the inclined portion is formed.

3. The one-sided electrode according to claim 1,
wherein the tape is formed to have a length equal to the width of the one-sided electrode, which is perpendicular to the direction in which the tab of the one-sided electrode protrudes.

4. The one-sided electrode according to claim 1,
wherein the tape is a casted polypropylene(CPP).

5. The one-sided electrode according to claim 1,
wherein the thickness of the tape is 30% to 100% of the thickness of the flat portion.

6. A method for manufacturing a one-sided electrode of claim 1, in which:
an electrode slurry containing an active material is applied to one surface of a current collector sheet, dried, and rolled to form an active material layer having a flat portion having a constant thickness and an inclined portion whose thickness decreases compared to the flat portion, and before a slitting process in which the sheet is cut into unit electrodes, tape is attached to the other surface of the current collector sheet corresponding to the inclined portion.

7. The method for manufacturing a one-sided electrode according to claim 1,
wherein the inclined portion formed by application of the electrode slurry is formed on the non-coated portion side of the current collector sheet where the electrode slurry is not applied and the tab is subsequently formed.

8. The method for manufacturing a one-sided electrode according to claim 7,
wherein the tab is formed by a notching process, and the notching process is performed simultaneously with the slitting process or after the slitting process.

9. An electrode assembly for a secondary battery, comprising: a cathode, an anode, and a separator interposed between the cathode and the anode, wherein the one-sided electrode of claim 1 is located at one or both outermost sides of the electrode assembly.

10. The electrode assembly according to claim 9,
wherein the one-sided electrode is a one-sided cathode.

11. The electrode assembly according to claim 10,
wherein the active material layer of the one-sided cathode is formed in a direction facing the anode located on the inside of the electrode assembly.

12. The electrode assembly according to claim 9,
wherein the electrode assembly is a stack-and-fold type electrode assembly having a structure in which unit cells including an electrode and a separator are wound in one direction by a separation film, a lamination-and-stack type electrode assembly having a structure in which the unit cells and the separator are stacked and laminated, or a zigzag stack type electrode assembly in which the unit cells or unit electrodes are folded in a zigzag form by the separation film.

13. A secondary battery comprising the electrode assembly according to claim 9, and an electrolyte.
